# EUROPEAN PATENT SPECIFICATION

(11) **EP 1 577 012 B1**
(45) Date of publication and mention of the grant of the patent: **05.11.2014**
(21) Application number: 05100768.0
(22) Date of filing: 04.02.2005
(51) Int. Cl.: B01L 9/00, B01L 3/00

(54) **Frame comprising microfluidic chip**
Aufnahmevorrichtung mit mikrofluidischem Chip
Réceptacle avec puce microfluidique

(30) Priority: 08.03.2004 WO PCT/EP2004/050270
(43) Date of publication of application: 21.09.2005
(73) Proprietor: Agilent Technologies, Inc., Santa Clara CA 95051 (US)
(72) Inventor: REINHARDT, Thomas, 76227, Karlsruhe (DE); BAEUERLE, Martin, 77830, Bühlertal (DE)
(74) Representative: Dilg, Haeusler, Schindelmann Patentanwaltsgesellschaft mbH

(56) References cited:
- WO-A-00/78456
- DE-A- 10 122 457
- US-A- 6 048 498
- US-A1- 2003 212 345
- US-A1- 2003 223 906

## Description

### BACKGROUND ART

The present invention relates generally to microfluidic laboratory technology for chemical, physical, and/or biological analysis or synthesis of substances on a substrate with a microfluidic structure. It relates in particular to handling substrates with microfluidic structure.

There are efforts in to miniaturize separation systems, such as liquid chromatography and capillary electrophoresis systems, as such miniaturized systems generally provide improved performance characteristics. This results in reduced production and analysis costs. Due to miniaturization the expenditure of coupling and handling the devices increases. Especially handling microfluidic chips with a complex fluidic channel system demands increasing effort. Known in the art are glass chips fixedly glued on a plastic carrier as disclosed for example in the US 6,495,104 B1. Another approach is to implement the miniaturized fluidic channel structure on flexible chips as disclosed in US 5,500,071. When used for separation, such microfluidic chips may comprise very sensitive parts, which can be damaged by touching. In addition, when using mechanically flexible material, this may complicate handling and positioning before coupling such microfluidic chips with a laboratory apparatus, for example, a mass spectrometer.

DE 100122457 A1 discloses a container for an analytical chip. US 6,663,837 discloses a housing box for electronic chip with biological probes. A microfluidic device is known from US 6,048,498.

### DISCLOSURE OF THE INVENTION

It is an object of the invention to provide an improved handling of a microfluidic chip. The object is solved by the independent claims. Preferred embodiments are shown by the dependent claims.

According to embodiments of the present invention, a miniaturized microfluidic device comprises a frame and a microfluidic chip. The microfluidic device can be used to inject liquid safely and precisely into a laboratory apparatus, e.g. by inserting or feeding the microfluidic device into such laboratory apparatus. During storing and handling, the microfluidic chip can be protected by the frame against possible damage. The frame allows handling the miniaturized device without endangering sensitive parts of the microfluidic chip and positioning in the laboratory apparatus. The sensitive microfluidic chip can be brought relative to the frame from a first position to a second position.

The frame is adapted for receiving and protecting the microfluidic chip and further allows positioning the microfluidic chip relatively to the frame. The frame is configured for permitting the microfluidic chip moving relatively to the frame. Very sensitive parts of the microfluidic chip can be protected during handling, storage, and transport, so that the frame can be touched and stored without destroying the sensitive parts of the microfluidic chip. Coupling with a laboratory apparatus such as a mass spectrometer, can thus be improved. Additionally, an exact and repeatable positioning process of the microfluidic chip relatively to the frame can be ensured. This also enables the exact positioning of the chip into a laboratory apparatus.

The microfluidic chip comprises at least one inlet port and at least one microfluidic channel, in particular for usage with a laboratory apparatus. The microfluidic chip can comprise at least one spring. Advantageously, the chip can be moved against the restoring force of the spring to simplify the handling of the microfluidic chip.

In a preferred embodiment the spring of the microfluidic chip is used to move the chip from a second operating position back to a first non-operating position automatically after use. In the non-operating position it is possible to protect the chip and its sensitive parts automatically after use.

In another advantageous embodiment the spring is built of a plurality of patterned recesses in the material of the microfluidic chip. The recesses can be punched or cut directly into the chip in an easy and a cost-saving way. Additional parts are not needed. The material of the chip is elastic and builds the spring itself.

Embodiments of the invention can be supported by one or more suitable software programs, which can be stored on or otherwise provided by any kind of data carrier, and which might be executed in or by any suitable data processing unit. Software programs or routines are preferably applied for maintaining the device and/or the microfluidic chip. The frame may comprise an identification-tag, in particular a radio frequency chip. The chip can be programmed and read out by a transponder system connected with the data processing unit. In particular, a counter to count the amount of analyzed samples with the microfluidic chip can be implemented in the radio frequency chip.

### BRIEF DESCRIPTION OF DRAWINGS

Other objects and many of the attendant advantages of embodiments of the present invention will be readily appreciated and become better understood by reference to the following more detailed description of preferred embodiments in connection with the accompanied drawings. Features that are substantially or functionally equal or similar will be referred to with the same reference signs.
Fig. 1 shows a three-dimensional view of a miniaturized microfluidic device with a space frame, a handle, and an asymmetric microfluidic chip inside.
Fig. 2 shows a three-dimensional exploded view of the device of Figure 1, but without the handle and microfluidic chip.
Fig. 2A shows a schematic cross-sectional view of a bottom layer of the device of Figure 2, taken along the lines A - A of Figure 2.
Fig. 2B shows a schematic cross-sectional view of the bottom layer of the device of Figure 2, taken along the lines B - B of Figure 2.
Fig. 3 shows a top view of the device of Figure 2.
Fig. 4 shows a schematic partly bottom view of the device of Figure 1.
Fig. 5 shows the microfluidic chip of Figure 1.
Fig. 6 shows a symmetric microfluidic chip with an integrated spring.
Fig. 6A shows a detail view of the microfluidic chip of Fig. 6 with elongated spring.
Fig. 7 shows a miniaturized microfluidic device with a microfluidic chip, with a partly die-cast coating and with a protection flap.
Fig. 7A shows a cross-sectional view of the device of Figure 7, taken along the lines A - A of Figure 7.
Fig. 7B shows a cross-sectional view of the device of Figure 7, taken along the lines B - B of Figure 7.
Fig. 8 shows a top view of a feeder for the die-casting process of the device of Fig 7.
Fig. 9 shows an inner view of the feeder of Fig 8.
Fig. 10 shows a solid and foldable frame for a microfluidic chip.
Fig. 11 shows a three-dimensional schematic view of a frame for receiving a microfluidic chip embedded in a cartridge.
Fig. 12 shows a three-dimensional schematic view of the microfluidic chip embedded in the cartridge fitting into the frame of Fig. 11.
Fig. 13 shows a three-dimensional schematic view of the microfluidic chip of Fig. 12, but without the cartridge.
Fig. 14 shows a schematic side view of the cartridge of Fig. 12 with the microfluidic chip of Fig. 13.
Fig. 15 to 18 show schematic side views of the cartridge of Fig. 12 with the microfluidic chip of Fig. 13 within the frame of Fig. 11 in different positions together with a sealing plate comprising an actuating pin.

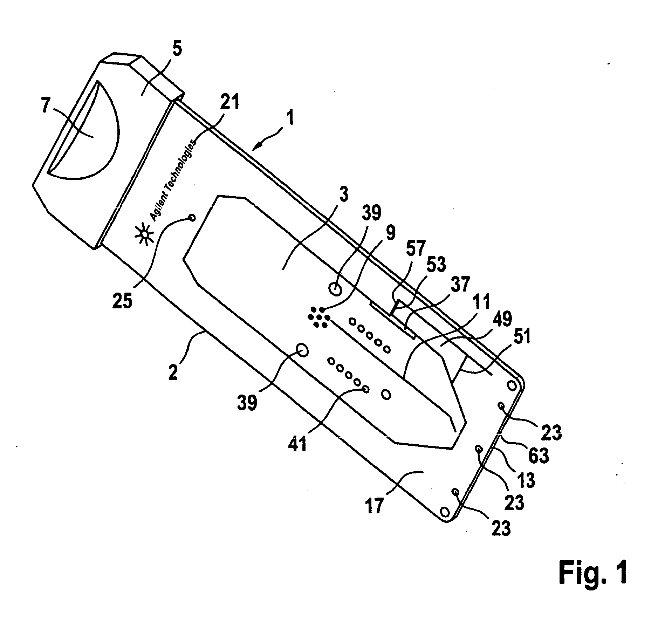

Fig. 1 shows a three-dimensional view of a microfluidic device 1 comprising a frame 2 for a microfluidic chip 3 with a handle 5. The handle 5 comprises a half circular recess 7 for better manual handling of the frame 2. In a preferred embodiment the frame 2 or the handle 5 comprises not shown means, for example holes, pins or like, for interacting with an automatic gripper. The not shown gripper can also interact with the half circular recess 7 of the handle 5.

The frame 2 of the device 1 can be inserted manually or by the gripper together with the microfluidic chip 3 into a not shown laboratory apparatus, for example a mass spectrometer.

The microfluidic chip 3 comprises at least one microfluidic inlet port 9, symbolized by some dots and at least one microfluidic channel 11.

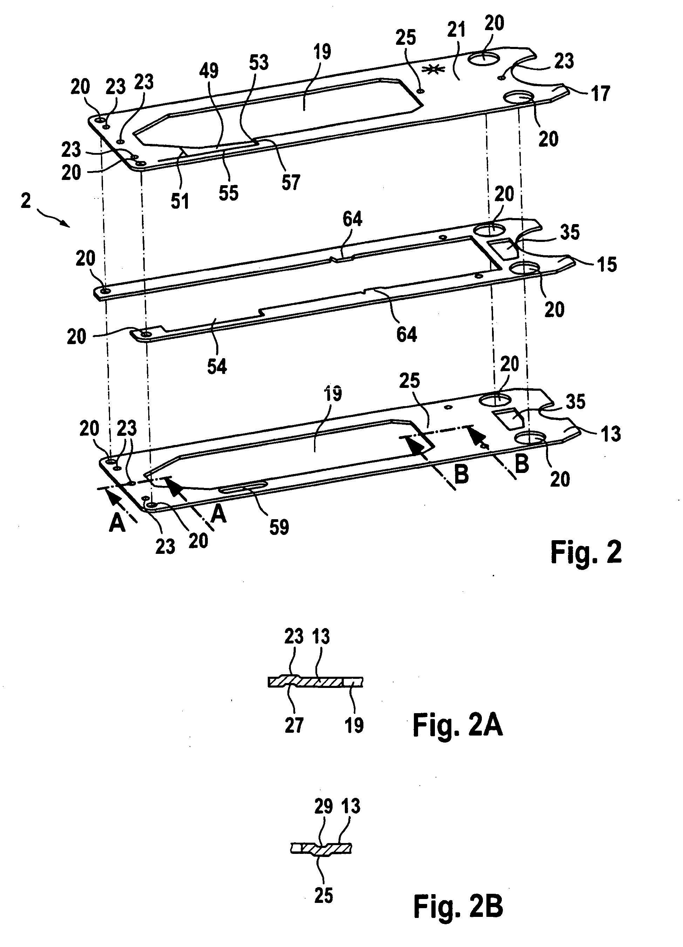

Fig. 2 shows a three-dimensional exploded view of the frame 2 of Figure 1, but without the handle 5 and without the microfluidic chip 3. The frame 2 is build as a space frame comprising a bottom layer 13, a middle layer 15, and a top layer 17. The middle layer 15 determines the height of the frame 2 and the space left between the layers 13 and 17 for the microfluidic chip 3. Simply by changing the middle layer 15 the frame can be adapted to microfluidic chips of different thicknesses. The layers 13 and 17 each comprise a window 19. The microfluidic chip 3 inserted into the assembled frame 2 is easily accessible through the windows 19 of the layers 13 and 17 as also illustrated in Figure 1.

In a preferred embodiment the frame 2 and its layers 13, 15, 17 consist of metal. They may also comprise foil, laminate, plastic or any other suitable material. The layers can be produced by stamping, laser or water jet cutting, die-casting, etching, or alike. The layers 13, 15, 17 can be glued together or can be fixed by screws, rivets, laser welding, or like and according holes 20 of any size. Additionally the handle 5 can be fixed to the frame 2 by on ore more of the holes 20. The frame 2 can have more or less than 3 layers.

It is to be understood that, throughout this description, wherever the term 'die-casting' is used, injection molding can be applied accordingly.

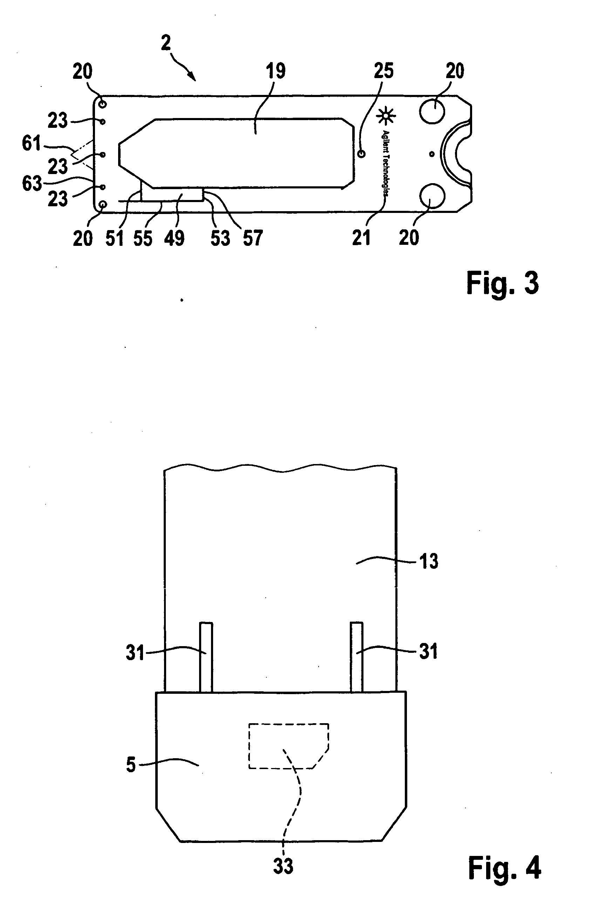

Figure 3 shows a top view of the frame 2. Advantageous the frame 2 can be labeled with a logo 21, a bar code, a color code, a blank label to be marked manually or like. In the embodiment shown in the Figures 1 to 3 the top layer 17 of the frame 2 comprises the logo 21.

Fig. 2A shows a schematic cross-sectional view of the bottom layer 13 of the frame 2 of the device 1 of Figure 2 with the spacing nose 23, taken along the lines A-A of Figure 2;

Fig. 2B shows a schematic cross-sectional view of the bottom layer of the device of Figure 2 with the locking nose 25, taken along the lines B - B of Figure 2;

The layers 13 and 17 each comprise three or four spacing noses 23 and one locking nose 25. The noses 23 and 25 can be produced by forming blind holes 27 and 29 in the layers 13 and 17. It is also possible to produce them in any other way, for example by riveting, screwing, and gluing additional parts to the layers 23 and 25 or like. The blind hole 29 of the locking nose 25 is deeper than the blind hole 27 of the spacing nose 23.

Fig. 4 shows a schematic bottom view of a part of the frame 2. In a preferred embodiment the frame 2 or the handle 5 of the frame 2 comprises at least one rib 31. Shown are two ribs 31. The ribs 31 can interact with means of the laboratory apparatus not illustrated in here. The top side of the frame is different compared to its bottom side. Consequently the frame 2 can only be fed into the laboratory apparatus in one correct way.

Illustrated with dotted lines is a radio frequency chip 33 inside the handle 5 of the frame 2 of another embodiment. The radio frequency chip 33 can realize an identification-tag. The radio frequency chip 33 can be programmed and read out by a transponder system connected with a data processing unit. In particular, the tag 33 can hold data for maintenance, diagnostic and configuration purposes and/ or a counter to count the amount of analyzed samples with the microfluidic chip is implemented in the radio frequency chip 33. In a preferred embodiment the radio frequency chip 33, the microfluidic chip 3 and the frame are not separable. This can avoid any manipulation of the counting and maintaining process. The handle 5 comprises the radio frequency chip 33. It lays inside the handle 5 in two openings 35 of the bottom layer 13 and the middle layer 15 and is spaced from the top layer 17 by the spacing nose 23 (Fig. 2).

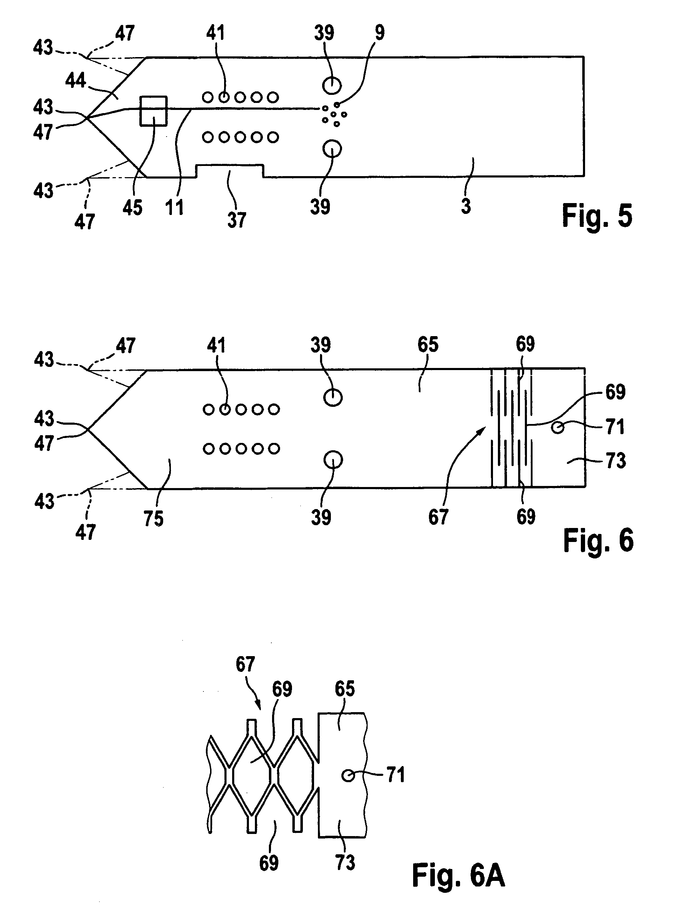

Fig. 5 shows the microfluidic chip 3 of Figure 1 but without the frame 2. The chip 3 is asymmetric because of a rectangular recess 37 at one of its sides. In this embodiment the microfluidic chip 3 comprises at least two alignment or gripping holes 39, to interact with, for example, an automatic gripper or another instrument suitable for gripping and aligning the microfluidic chip 3, 10 electrical contacts 41 and at least one outlet port 43 for the microfluidic channel 11. Of course, more or less than 10 electrical contacts 41 can be foreseen. Two more optional outlet ports 43 are indicated with dotted lines. The microfluidic channel 11 connects the inlet port 9 sited approximately in the middle of the microfluidic chip 3 with the outlet port 43 sited at the front end 44 of the microfluidic chip 3. The microfluidic chip 3 can have more than one channels or a complex system of channels to connect the other ports 9 and 43 of the microfluidic chip 3. For analyzing or separation it is possible to press liquid through the port 9 - into the chip 3 - and into the channel 11. Therefore the microfluidic chip 3 can also have a detection area. The cannel 11 crosses the detection area 45. The liquid being inside the channel 11 can be analyzed by optical means sited close to the chip 3 through the detection area 45. For this purposes the detection area is at least partly transmissible.

The length of the microfluidic chip 3 in this embodiment is longer than necessary. Functional elements are only installed between the front end 44 and the holes 39 of the microfluidic chip 3. The microfluidic chip 3 is longer than necessary and adapted to the frame 2. Advantageously, it is easier to extend and adapt the length of the microfluidic chip 3 to the length of one kind of frames than opposite. The microfluidic chip 3 can comprise additionally microfluidic devices like reactors or alike.

If the microfluidic chip 3 is used to separate the components of the liquid, the liquid is pressed through the channel 11 towards one of the outlet ports 43 and sprayed into a laboratory apparatus, which can be a mass spectrometer for example. The outlet port 43 or better the front end 44 of the microfluidic chip 3 is designed as a micro spray tip 47. The spray tip 47 is very sensitive and has to be protected against any damage, which could be caused by touching or like.

Referring to the figures 1 to 5 it is described how the device 1 or better the frame 2 for the microfluidic chip 3 prevents the spray tip 47 from any undesirable damage. This results in an improved and save method for handling, storage, and transport.

If the microfluidic chip 3 is not used, a locking pawl 49 of the top layer 17 is engaged with the recess 37 of the microfluidic chip 3. The pawl 49 can lock the microfluidic chip 3 until actual usage. The locking pawl 49 is inclined or respectively bent at an edge 51 from the top layer 17 towards the bottom layer 13 of the frame 2. The pawl 49 comprises an end 53, which is in contact with the bottom layer 13, engaged in a recess 54 of the middle layer and under slight tension. The longitudinal sides of the pawl 49 are adjacent to a first recess 55 of the top layer 17 and the window 3. The end 53 of the pawl 49 is adjacent to a second recess 57 of the top layer 17. The recesses 55 and 57 can be punched or cut, for example by laser, etching, or water jet cutting, in the material of the top layer 17. The pawl 49, which is a leave spring with one leave, is engaged in the recess 37 of the microfluidic chip 3 and locks it in a first non-operating position. The pawl 49 is consequently part of a first lock for keeping the chip 3 in its first position. In this first non-operating position the microfluidic chip 3 cannot be moved relatively to the frame 2. Advantageously, the pawl 49 opens itself when the chip 3 is inserted firstly into the frame 2 and locks after inserting the chip 3 automatically in the first position. Because of the recess 37 the chip 3 can only be locked if it is inserted into the frame 2 in one correct way. The frame 2 or the chip 3 may have a mechanism or means, for example another recess and a pin, for guaranteeing that the chip 3 can only be fed into the frame 2 in one correct way.

For bringing the microfluidic chip 3 in a second position, which can be an operating position, the pawl 49 must be opened by an opening mechanism, which can be a pin not shown here. The opening mechanism can be actuated manually or automatically. The pin can be inserted into an asymmetric elongated hole 59 of the bottom layer 13 and move the pawl 49 or respectively the end 53 of the pawl 49 against a restoring force towards the top of the frame 2 out of the recess 37 of the microfluidic chip 3. In this position the pin can be engaged in the recess 37 of the microfluidic chip 3 to determine the possible movements along the longitudinal axis of the frame 2 of the chip 3 according to the length of its recess 37. The pin can lock the chip 3 in the second position.

The frame can have a second lock for locking the chip at the second position. The second lock avoids separating the microfluidic chip 3 and the frame 2. The second lock can comprise a pin, a screw, a rivet or alike which is for example engaged in the recess 37 of the chip 3. The second lock can be installed for example between two of the spacing noses 23 in two opposite holes - which are not illustrated - in the layers 13,17 to lock the front end 44 of the microfluidic chip 3 in the second position. To create the second lock, the top or the bottom layer 13, 17 can be deformed after inserting the microfluidic chip 3, for example by forming or installing a nose similar to the noses 23, 25.

If the first lock respectively the pawl 49 is released, the microfluidic chip 3 can be moved relatively to the frame 2 for bringing it in the second position. The second position is symbolized by a dotted line 61 in figure 3. The microfluidic chip 3, in particular its spray tip 47, is moved partly out of the frame 2 through a rectangular front slot 63 of the frame.

In another embodiment the microfluidic chip 3 is removable from the frame 2 respectively changeable. The frame 2 can be used consequently for more than one microfluidic chip 3.

The microfluidic chip 3 is guided by the spacing noses 23, which rise right-angled to the inner surface of the frame 2 in the front slot 63. In the first position the spray tip 47 lies in the area of the adjacent noses 23. The noses 23 avoid any touching of the spray tip with the inner surface of the frame 2.

To operate the microfluidic chip 3 inside a laboratory apparatus, the opening mechanism can be integrated in the apparatus.

In a first step the frame 2 of the device 1 can be fed into a laboratory apparatus and can be locked therein by the locking noses 25 rising right-angled to the outer surface of the frame 2. For locking the frame 2 inside the laboratory apparatus, the locking noses 25 can be gripped by a mechanism. Then the pawl 49 is opened, for example by a pin. Subsequently the microfluidic chip 3 can be gripped manually or by a not shown gripper, for example by gripping the chip 3 at its gripping holes 39. Then the microfluidic chip 3 can be moved in direction of its longitudinal axis relatively to the frame 2 from the first non-operating position to the second operating position. The middle layer 15 comprises two opposite shoulders 64 for guiding the chip 3 inside the frame 2. The frame 2 can be provided with only one guiding shoulder or more than two. For changing the position the shoulders can guide the chip 3 at its longitudinal sides.

The operating position is determined by the relative position of the spray tip 47 to the laboratory apparatus. It is possible to reach this operating position only by removing the frame 2 without any movement of the chip 3 relative to the laboratory apparatus. In the second position the spray tip 47 is released and can be positioned exactly inside the laboratory apparatus. To spray liquid inside the apparatus at least one of the ports 9 has to be connected to a means for pumping or charging the liquid, which can be part of the laboratory apparatus. For a chromatography or an electrophoresis process for the spraying process the microfluidic chip 3 can be laid at least to on electrical potential by connecting at least one of the electrical contacts 41 to a power supply.

To avoid noise voltage the frame 2 can be connected to the ground and can advantageously comprise a conductive material, such as metal or conductive rubber, or can comprise a conductive surface coating.

Figure 6 shows an embodiment with a symmetric microfluidic chip 65 with an integrated spring 67. The spring 67 is built of a plurality of patterned recesses 69 in the material of the microfluidic chip 65.

Fig. 6A shows a detail view of the microfluidic chip 65 of Fig. 6 with the elongated spring 67. The microfluidic chip 65 comprises two kinds of recesses 69 placed in an alternating manner. They are sited right-angled in respect to the longitudinal axis of the microfluidic chip 65 and parallel to each other. One type is in the middle of the microfluidic chip 65 and the other kind reaches to the side rims of the microfluidic chip 65.

The microfluidic chip 65 can be coupled with the frame 2. Therefore, the microfluidic chip 65 can be fixed in the frame 2 by a hole 71 at an inside end 73 of the microfluidic chip 65. A distal end 75 can be moved relatively to the frame 2 as described above. Advantageously, the distal end 75 is removed back in the non-operating position automatically by the restoring force of the spring 67.

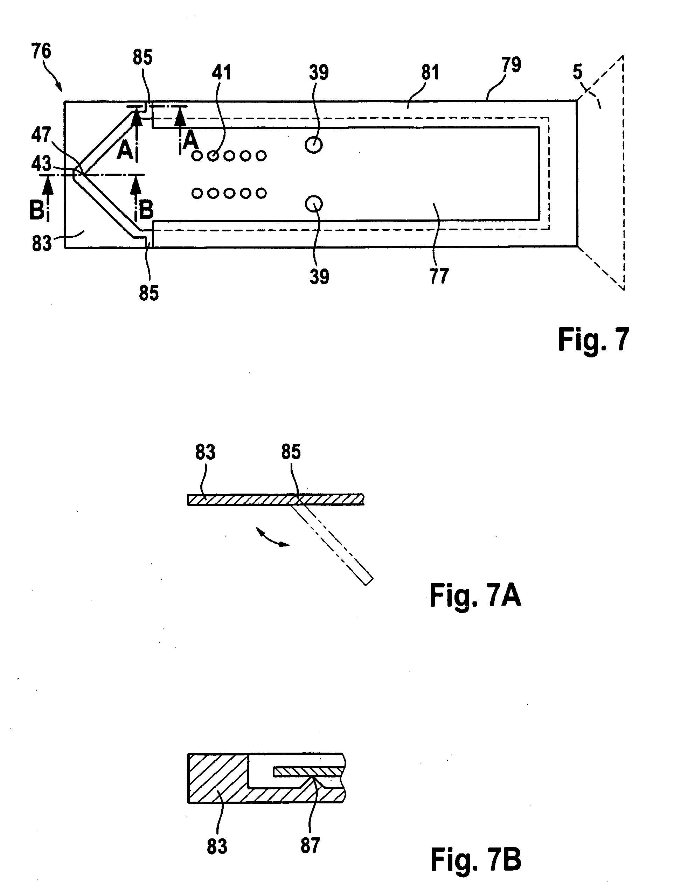

Fig. 7 shows a miniaturized microfluidic device 76 with a microfluidic chip 77, with a frame 79 comprising a partly pressure die-cast coating 81, and with a protection flap 83. Fig. 7A shows a cross-sectional view of the device 76 of Figure 7, taken along the lines A - A of Figure 7. Fig. 7B shows a cross-sectional view of the device 76 of Figure 7, taken along the lines B - B of Figure 7.

The flap 83 is hinged at the device 76 by an integral hinge 85. To uncover the spray tip 47 of the microfluidic chip 77 or to bring it in working position, the flap 83 can be hinged to an axis right angled to the longitudinal axis of the microfluidic chip 77 as shown in Figure 7A. The protection flap can also be hinged to any other axis, for example to an axis parallel to the longitudinal axis of the frame 79.

The frame 79 respectably the die-cast coating 81 is not separable from the microfluidic chip 77. Advantageously, this complicates or prevents reverse engineering.

The flap 83 comprises a spacing nose 87 with the same protection for the spray tip 47 as described above. The nose 87 is rising towards the microfluidic chip 77 in the area of its spray tip 47 if the flap 83 is hinged towards the microfluidic chip 77 as shown in Figure 7B.

The frame 79, the hinge 85, and the coating 81 can be produced by die-casting.

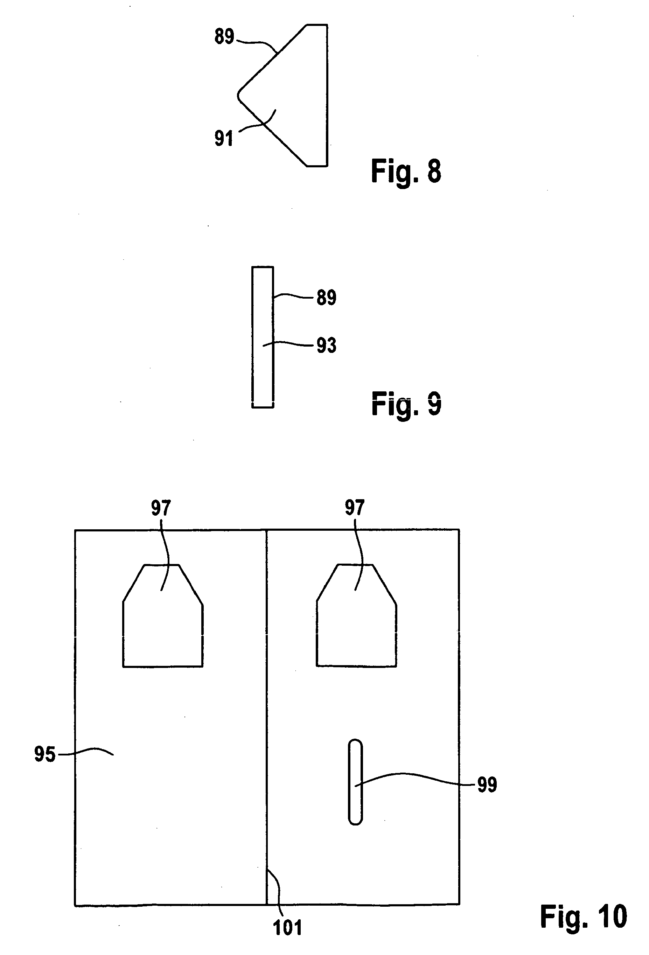

Fig. 8 shows a top view of another embodiment with a feeder 89 forming a part of the flap 83 and the nose 87 for this die-cast process of the device of Fig 7. Fig. 9 shows a schematic inner view of the feeder 89 of Fig 8. The feeder 89 has a blind hole 91 in order to form the nose 87 of the flap 83. During the die-cast process the distal end 75 and the spray tip 47 are moved partly into a slot of the feeder 89. Thus the spray tip 47 is protected during die-casting.

Fig. 10 shows another embodiment with a solid and foldable frame 95 for a microfluidic chip 3. Compared to the frame 2 the frame 95 consists only of one single part, which may be also produced by pressure die-casting. The frame 95 has two smaller windows 97 and an elongated hole 99 for the gripping mechanism. This frame 95 can contain smaller microfluidic chips 3 and can be closed or opened by folding it at a middle hinge 101. The middle hinge 101 can be an integral hinge. For assembling the frame 95, it can be folded and locked by a locking mechanism. Instead of locking the frame 95, it can be glued together, sealed, for example by ultrasonic welding or heat sealing.

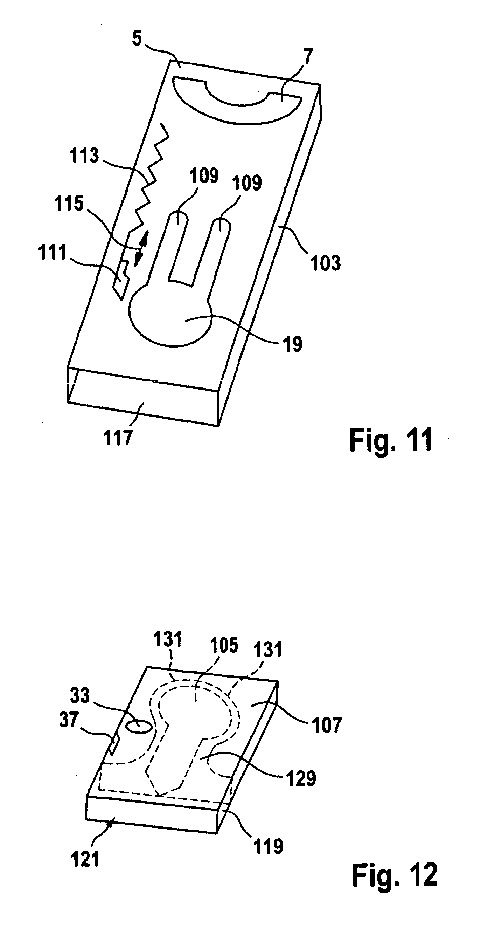

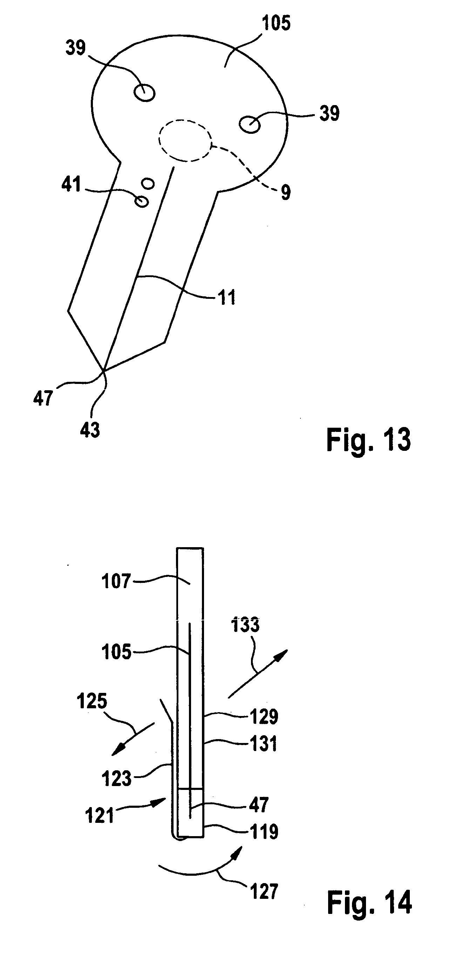

Fig. 11 to 18 show a further embodiment of a frame 103 adapted for receiving a microfluidic chip 105 embedded in a cartridge 107. The design of the frame 103 is described in the following by referring to the Fig. 11 to 14. Fig. 11 shows a three-dimensional schematic view of the frame 103. Fig. 12 shows a three-dimensional schematic view of the microfluidic chip 105 embedded in the cartridge 107 fitting into the frame 103 as shown in Fig. 11. Fig. 13 shows a three-dimensional schematic view of the microfluidic chip 105 as shown in Fig. 12, but without the cartridge 107. Fig. 14 shows a schematic side view of the cartridge 107 as shown in Fig. 12 with the embedded microfluidic chip 105 as shown in Fig. 13.

The frame 103 comprises two elongated holes 109 leading to a circular window 19 of the frame 103 for accessing the chip 105 within the cartridge 107. A not shown gripping mechanism can actuate the cartridge 107 together with the chip 105 by gripping two gripping holes 39 of the microfluidic chip 105. The frame 103 can receive the cartridge 107 and realizes a slide bearing for the cartridge 107 within the frame 103. The cartridge 107 and consequently the embedded microfluidic chip 105 can be positioned relative to the frame 103 by sliding the cartridge 107 within the frame 103.

The frame 103 can comprise a fixing element for the cartridge 105. Fig. 11 shows the frame 103 with a catch 111 combined with a longitudinal return spring 113. The return spring 113 is parallel to the direction of the degree of freedom of the slide bearing for the cartridge 107 within the frame 103 as indicated with a double arrow 115. One end of the return spring 113 is coupled with the frame 103 and the other end of the spring 113 located close to a front opening 117 of the frame 103, wherein the other end of the spring 113 is coupled with the catch 111.

Before using the microfluidic chip 105, the cartridge 107 can be inserted through the front opening 117 of the frame 103 into the frame 103. After inserting the cartridge 107 into the frame 103, the catch 111 of the frame 103 engages with a recess 37 of the cartridge 107. The catch 111 and the recess 37 realize a lock to interact with the frame 103 for keeping the cartridge 107 in a first position, in particular in a non-operating position.

The restoring force of the return spring 113 can be transferred from the frame 103 to the cartridge 107 via the catch 111 engaged with the recess 37 of the cartridge 107. This makes it possible, that the cartridge 103 and consequently the microfluidic chip 105 is moved automatically in the non-operating position within the frame when the microfluidic chip 105 is not used. The sensitive spray tip 47 of the microfluidic chip 105 can be protected during handling, storage, and transport. The frame 103 can be touched and stored without destroying the sensitive spray tip 47 of the microfluidic chip 105.

The frame 103 can receive arbitrary cartridges 107. The microfluidic chip 105 can be coupled with the cartridge 107. Advantageously, the cartridge 107 can protect the microfluidic chip 105 during handling, storage, and transport. Therefore, the cartridge 107 can comprise a removable protection cap 119, for example realizing a tamper-evident closure 121 for completely covering at least all sensitive parts of the microfluidic chip 105. The tamper-evident closure 121 of the cartridge 107 for protecting the microfluidic chip 105 can comprise a removable self-adhesive plastic sheeting 123. For uncovering the spray tip 47 of the microfluidic chip 105, the self-adhesive plastic sheeting 123 and the protection cap 119 can be removed completely as illustrated in Fig. 14 as follows:

Firstly, the self-adhesive plastic sheeting 123 can be removed in direction of an arrow 125. The protection cap 119 can be coupled with the self-adhesive plastic sheeting 123. Therefore, subsequently, the protection cap 119 can be removed in direction of an arrow 127 simply by gripping the self-adhesive plastic sheeting 123 or the protection cap 119 and moving the protection cap 119 in direction of the arrow 127. Finally, the self-adhesive plastic sheeting 123 and the protection cap 119 can be removed completely together with a window part 129 as indicated with an arrow 133. The window part 129 is coupled with the cartridge 107 via a perforation 131 as indicated in the Fig. 12 and 14 with dotted lines. Removing the window part 129 destroys the perforation 131 and opens a window 135 of the cartridge 107 for accessing the microfluidic chip 105.

The cartridge 107 can comprise at least one identification-tag, for example a radio-frequency-chip 33 as shown in Fig. 12. The radio-frequency-chip 33 can be fixedly assigned to the microfluidic chip via the cartridge 107.

Advantageously, the cartridge 107 can comprise a cheep plastic material compared to the material of the microfluidic chip 105. This makes it possible to save cost by minimizing the size of the microfluidic chip 105. The external dimensions of the cartridge 107 can be produced out of the cheep plastic material and can be standardized and adapted to the size of the frame 103. The cartridge 107 together with the microfluidic chip 105 can be designed as a wearing part, for example with standardized external dimensions. Therefore, the frame 103 can be designed reusable for a plurality of different cartridges 107. In a not shown embodiment, the cartridge 107 can comprise at least one not shown alignment hole.

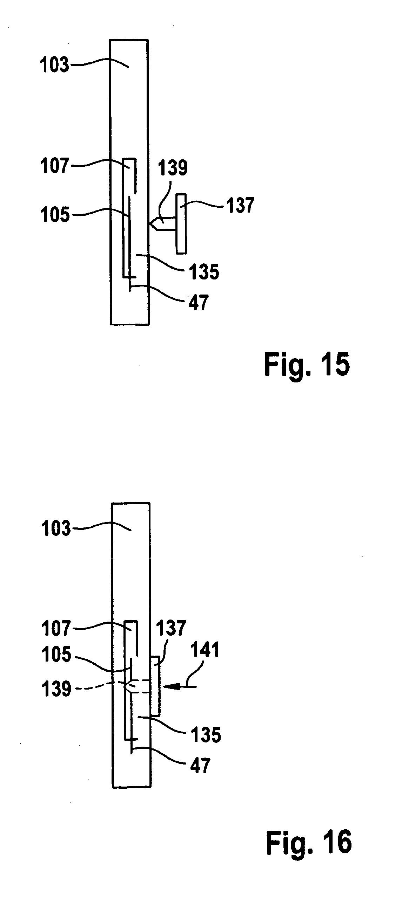

Fig. 15 to 18 show schematic side views of the cartridge 107 of Fig. 12 with the microfluidic chip 105 as shown in Fig. 13 within the frame as illustrated in Fig. 11 in different positions together with a sealing plate 137 comprising two actuating pins 139, wherein in the Fig. 15 to 18 just one of the actuating pins 139 is visible.

Fig. 15 shows the cartridge 107 and the microfluidic chip 105 in the non-operating position, wherein the removable protection cap 119 and the tamper-evident closure 121 are removed completely. Therefore, the window 135 of the cartridge 107 is opened and the microfluidic chip 105 is accessible. In the position as illustrated in Fig 15, the actuating pins 139 are facing the elongated holes 109 of the frame 103 and the gripping holes 39 of the microfluidic chip 105. The gripping holes 39 lay behind the elongated holes 109.

For gripping the microfluidic chip 105, the actuating pins 139 of the sealing plate 137 can be moved through the elongated holes 109 of the frame 103 into the gripping holes 39 of the microfluidic chip 105 in direction of an arrow 141 shown in Fig. 16.

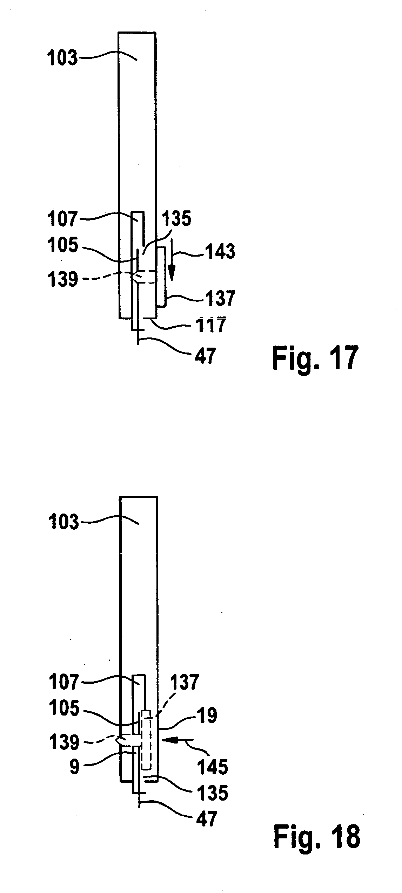

After gripping the microfluidic chip 105, the microfluidic chip 105 can be moved - in direction of the Fig. 17 - downwards against the restoring force of the return spring 113 (not illustrated in Fig. 17) of the frame 103. The direction of movement is illustrated in Fig. 17 with an arrow 143. Fig. 17 shows the microfluidic chip 105 together with the cartridge 107 in an operating position, wherein the spray tip of the microfluidic chip 105 stands out of the front opening 117 of the frame 103.

Finally, for sealing at least one inlet port 9 of the microfluidic chip 105, the sealing plate 137 can be moved through the window 19 of the frame 103 and the window 135 of the cartridge 107 towards the microfluidic chip 105 as indicated in Fig. 18 with an arrow 145. In the position as shown in Fig. 18, the sealing plate 137 can be pressed against the microfluidic chip 105 and against a not shown counter bearing behind the microfluidic chip 105 for sealing the inlet port 9 of the microfluidic chip 105.

The frames described above can receive any kind of microfluidic chips. Advantageously, the frames can receive chips comprising at least on sensitive part which has to be protected and/or chips which has to be positioned exactly in a laboratory apparatus.

In another embodiment the frame 2 can comprise a protection shield, which is movable lateral to the feeding direction of the device 1 into the laboratory apparatus. For bringing the chip 3 in the operating position, for example after or while feeding it to the laboratory apparatus, respectively to unprotect it, the shield can be removed manually or automatically by a mechanism.

In a further embodiment the device 1 is adapted to be stored in a storing rag.

In another embodiment the frame 2 and the microfluidic chip 3 are integrated in a banker's card with a thickness less than 1 mm. Devices like this can be sent easily by mail.

Besides this in an embodiment the device 1 or the frame 2 comprises a heat dissipation device for cooling the microfluidic chip 3.

Advantageously, the frame 2 is chemical resistant. By this any leakage of liquid can't cause any damage to the frame 2.

## Claims

1. A miniaturized microfluidic device (1) comprising:
a microfluidic chip (3;65;77;105) comprising a microfluidic channel (11) and at least one of an inlet port (9) and an outlet port (43) coupled to the microfluidic channel (11), and
a frame (2;79;95;103) configured for receiving the microfluidic chip (3;65;77;105),
**characterized in that** the frame (2;79;95;103) is configured for permitting the microfluidic chip (3;65;77;105) to be moveable relative to the frame (2;79;95;103) and **in that** the microfluidic chip (3;65;77;105) is accessible through a window (19) of the frame (2;79;95;103).

2. The microfluidic device (1) of claim 1, further comprising:
a first lock to interact with the microfluidic chip (3;65;77;105) for keeping the microfluidic chip (3;65;77;105) in a first position,
wherein the first lock can be actuated by an opening mechanism to bring the microfluidic chip (3;65;77;105) into a second position.

3. The microfluidic device (1) of claim 2, wherein
the first position is a non-operating position, wherein the microfluidic chip (3) cannot be moved relatively to the frame (2), and
the second position is an operating position, wherein the microfluidic chip (3) can be moved relatively to the frame (2).

4. The microfluidic device (1) of claim 2 or 3, wherein
the frame (2;79;95;103) is a space frame comprising at least two layers (13,16),
at least one of the layers (13,16) comprises a locking pawl (49) to interact with a locking recess (37) of the microfluidic chip (3;65;77; 1 05) for locking the microfluidic chip (3;65;77;105) in the first position.

5. The microfluidic device (1) of any one of the above claims 2-4, wherein
the frame (2;79;95;103) comprises a spring (67;113) to move the microfluidic chip (3;65;77;105) automatically from the second position back to the first position after use.

6. The miniaturized microfluidic device of any one of the claims 2-5, wherein
the microfluidic chip (3;65;77;105) comprises a spring (67;113) configured for moving the microfluidic chip (3;65;77;105) after use automatically from the second position back to the first position.

7. The miniaturized microfluidic device of or any one of the above claims, wherein
the outlet port (43) of the microfluidic chip (3;65;77;105) is designed as a micro spray tip (47) coupled to the microfluidic channel (11) and being configured for spraying liquid into a laboratory apparatus, and
in the first position, the spray tip (47) is protected within the frame (2).

8. The miniaturized microfluidic device of claim 7, wherein
in the second position, the spray tip (47) is released and can be positioned inside the laboratory apparatus.

9. A method of using a miniaturized microfluidic device (1), wherein the miniaturized microfluidic device (1) comprises a microfluidic chip (3;65;77;105), having a microfluidic channel (11) and at least one of an inlet port (9) and an outlet port (43) coupled to the microfluidic channel (11), and a frame (2;79;95;103) configured for receiving the microfluidic chip (3;65;77;105) and for permitting the microfluidic chip (3;65;77;105) to be moveable relative to the frame (2;79;95;103), the microfluidic chip being accessible through a window of the frame, the method comprising the steps of:
feeding the device (1) into a laboratory apparatus, and
moving the microfluidic chip (3;65;77;105) relative to the frame (2;79;95;103) from a first position to a second position.

10. The method of the preceding claim, comprising
operating the microfluidic chip (3;65;77; 105) and the laboratory apparatus, wherein the first position of the microfluidic chip (3;65;77;105) is a non-operating position and the second position is an operating position.

11. The method of claims 9 or 10, wherein the microfluidic chip (3;65;77;105) comprises a spray tip (47) coupled to the microfluidic channel (11) and being configured for spraying liquid into a laboratory apparatus, the method comprises in the first position, protecting the spray tip (47) within the frame (2), and in the second position, releasing the spray tip (47) and positioning the spray tip (47) inside the laboratory apparatus.

## Patentansprüche

1. Eine miniaturisierte mikro-fluidische Vorrichtung (1) aufweisend:
einen mikro-fluidischen Chip (3; 65; 77; 105), aufweisend einen mikro-fluidischen Kanal (11) und mindestens einen Einlassanschluss (9) und einen Auslassanschluss (43), gekoppelt an den mikro-fluidischen Kanal (11), und
einen Rahmen (2; 79; 95; 103), welcher zum Empfangen des mikrofluidischen Chips (3; 65; 77; 105) konfiguriert ist,
**dadurch gekennzeichnet, dass** der Rahmen (2; 79; 95; 103) konfiguriert ist, um es dem mikro-fluidischen Chip (3; 65; 77; 105) zu erlauben, relativ zu dem Rahmen (2; 79; 95; 103) beweglich zu sein und dadurch, dass der mikro-fluidische Chip (3; 65; 77; 105) durch ein Fenster (19) des Rahmens (2; 79; 95; 103) zugänglich ist.

2. Die mikro-fluidische Vorrichtung (1) gemäß Anspruch 1, ferner aufweisend:
eine erste Verriegelung, welche mit dem mikro-fluidischen Chip (3; 65, 77; 105) interagiert, um den mikro-fluidischen Chip (3; 65; 77, 105) in einer ersten Position zu behalten,
wobei die erste Verriegelung mittels eines Öffnungsmechanismus betätigt werden kann, um den mikro-fluidischen Chip (3; 5; 77; 105) in eine zweite Position zu bringen.

3. Die mikro-fluidische Vorrichtung (1) gemäß Anspruch 2, wobei
die erste Position eine nicht-operierende Position ist, wobei der mikro-fluidische Chip (3) nicht relativ zu dem Rahmen (2) bewegt werden kann, und
die zweite Position eine operierende Position ist, wobei der mikro-fluidische Chip (3) relativ zu dem Rahmen (2) bewegt werden kann.

4. Die mikro-fluidische Vorrichtung (1) gemäß Anspruch 2 oder 3, wobei
der Rahmen (2; 79; 95; 103) ein räumlicher Rahmen ist, welcher mindestens zwei Schichten (13, 16) aufweist,
wobei mindestens eine der Schichten (13, 16) eine verriegelnde Sperre (49) aufweist, welche mit einer verriegelnden Aussparung (37) von dem mikro-fluidischen Chip (3; 65; 77; 105) interagiert, um den mikro-fluidische Chip (3; 65; 77; 105) in der ersten Position zu verriegeln.

5. Die mikro-fluidische Vorrichtung (1) gemäß einem der vorhergehenden Ansprüche 2 bis 4, wobei
der Rahmen (2; 79; 95; 103) eine Feder (67; 113) aufweist, um den mikro-fluidischen Chip (3; 65; 77; 105) nach Gebrauch automatisch von der zweiten Position zurück zu der ersten Position zu bewegen.

6. Die miniaturisierte mikro-fluidische Vorrichtung gemäß einem der vorhergehenden Ansprüche 2 bis 5, wobei
der mikro-fluidische Chip (3; 65; 77; 105) eine Feder (67; 113) aufweist, welche konfiguriert ist, um den mikro-fluidischen Chip (3; 65; 77; 105) nach Gebrauch automatisch von der zweiten Position zurück zu der ersten Position zu bewegen.

7. Die miniaturisierte mikro-fluidische Vorrichtung gemäß einem der vorhergehenden Ansprüche, wobei
der Auslassanschluss (43) von dem mikro-fluidischen Chip (3; 65; 77, 105) als eine Mikrospray-Spitze (47) gestaltet ist, welche an den mikro-fluidischen Kanal (11) gekoppelt ist, und welche zum Sprühen von Flüssigkeit in einen Laborapparat konfiguriert ist, und
wobei die Spray-Spitze (47) in der ersten Position innerhalb des Rahmens (2) geschützt ist.

8. Die miniaturisierte mikro-fluidische Vorrichtung gemäß Anspruch 7, wobei
die Spray-Spitze (47) in der zweiten Position losgelöst wird und in dem Laborapparat positioniert werden kann.

9. Ein Verfahren zum Verwenden einer miniaturisierten mikro-fluidischen Vorrichtung (1), wobei die miniaturisierte mikro-fluidische Vorrichtung (1) aufweist
einen mikro-fluidischen Chip (3; 65; 77; 105), welcher einen mikro-fluidischen Kanal (11) und mindestens einen Einlassanschluss (9) und einen Auslassanschluss (43) hat, gekoppelt an den mikro-fluidischen Kanal (11), und
einen Rahmen (2; 79; 95; 103), welcher konfiguriert ist zum Empfangen des mikro-fluidischen Chips (3; 65; 77; 105) und zum Erlauben des mikro-fluidischen Chips 3; 65; 77; 105), relativ zu dem Rahmen (2; 79; 95; 103) beweglich zu sein, wobei der mikro-fluidische Chip (3; 65; 77; 105) durch ein Fenster (19) des Rahmens (2; 79; 95; 103) zugänglich ist,
wobei das Verfahren die Schritte aufweist:
Eingeben der Vorrichtung (1) in einen Laborapparat, und
Bewegen des mikro-fluidischen Chips (3; 65; 77; 105) relativ zu dem Rahmen (2; 79; 95; 103) von einer ersten Position zu einer zweiten Position.

10. Das Verfahren gemäß dem vorhergehenden Anspruch, aufweisend
Operieren des mikro-fluidischen Chips (3; 65; 77; 105) und des Laborapparats, wobei die erste Position von dem mikro-fluidischen Chip (3; 65; 77; 105) eine nicht-operierende Position und die zweite Position eine operierende Position ist.

11. Das Verfahren gemäß einem der Ansprüche 9 oder 10,
wobei der mikro-fluidische Chip (3; 65; 77; 105) eine Spray-Spitze (47) aufweist, welche an den mikro-fluidischen Kanal (11) gekoppelt ist und zum Sprühen von Flüssigkeit in einen Laborapparat konfiguriert ist, wobei das Verfahren aufweist
Schützen der Spray-Spitze (47) in der ersten Position innerhalb des Rahmens (2), und
Loslösen der Spray-Spitze (47) in der zweiten Position und Positionieren der Spray-Spitze (47) in dem Laborapparat.

## Revendications

1. Dispositif microfluidique miniaturisé (1) comprenant :
une puce microfluidique (3 ; 65 ; 77 ; 105) comprenant un canal microfluidique (11) et au moins l'un d'un orifice d'entrée (9) et d'un orifice de sortie (43) couplé au canal microfluidique (11), et
un cadre (2 ; 79 ; 95 ; 103) configuré pour recevoir la puce microfluidique (3 ; 65 ; 77 ; 105),
**caractérisé en ce que** le cadre (2 ; 79 ; 95 ; 103) est configuré pour permettre à la puce microfluidique (3 ; 65 ; 77 ; 105) d'être déplaçable par rapport au cadre (2 ; 79 ; 95 ; 103) et **en ce que** la puce microfluidique (3 ; 65 ; 77 ; 105) est accessible à travers une fenêtre (19) du cadre (2 ; 79 ; 95 ; 103).

2. Dispositif microfluidique (1) selon la revendication 1, comprenant en outre :
un premier verrou pour interagir avec la puce microfluidique (3 ; 65 ; 77 ; 105) afin de maintenir la puce microfluidique (3 ; 65 ; 77 ; 105) à une première position,
dans lequel le premier verrou peut être actionné par un mécanisme d'ouverture pour amener la puce microfluidique (3 ; 65 ; 77 ; 105) à une deuxième position.

3. Dispositif microfluidique (1) selon la revendication 2, dans lequel
la première position est une position non opérationnelle à laquelle la puce microfluidique (3) ne peut pas être déplacée par rapport au cadre (2), et
la deuxième position est une position opérationnelle à laquelle la puce microfluidique (3) peut être déplacée par rapport au cadre (2).

4. Dispositif microfluidique (1) selon la revendication 2 ou 3, dans lequel
le cadre (2 ; 79 ; 95 ; 103) est un cadre d'espace comprenant au moins deux couches (13, 16),
au moins l'une des couches (13, 16) comprend un cliquet de verrouillage (49) pour interagir avec un évidement de verrouillage (37) de la puce microfluidique (3 ; 65 ; 77 ; 105) pour verrouiller la puce microfluidique (3 ; 65 ; 77 ; 105) à la première position.

5. Dispositif microfluidique (1) selon l'une quelconque des revendications 2 à 4, dans lequel
le cadre (2 ; 79 ; 95 ; 103) comprend un ressort (67 ; 113) pour déplacer la puce microfluidique (3 ; 65 ; 77 ; 105) automatiquement de la deuxième position à la première position après son utilisation.

6. Dispositif microfluidique miniaturisé selon l'une quelconque des revendications 2 à 5, dans lequel
la puce microfluidique (3 ; 65 ; 77 ; 105) comprend un ressort (67 ; 113) configuré pour déplacer la puce microfluidique (3 ; 65 ; 77 ; 105) après son utilisation automatiquement de la deuxième position à la première position.

7. Dispositif microfluidique miniaturisé selon l'une quelconque des revendications précédentes, dans lequel
l'orifice de sortie (43) de la puce microfluidique ( 3 ; 65 ; 77 ; 105) est conçu en tant que micropointe de pulvérisation (47) couplée au canal microfluidique (11) et configurée pour pulvériser un liquide dans un appareil de laboratoire, et
à la première position, la pointe de pulvérisation (47) est protégée à l'intérieur du cadre (2).

8. Dispositif microfluidique miniaturisé selon la revendication 7, dans lequel
à la deuxième position, la pointe de pulvérisation (47) est libérée et peut être positionnée à l'intérieur de l'appareil de laboratoire.

9. Procédé d'utilisation d'un dispositif microfluidique miniaturisé (1), dans lequel le dispositif microfluidique miniaturisé (1) comprend une puce microfluidique (3 ; 65 ; 77 ; 105) comprenant un canal microfluidique (11) et au moins l'un d'un orifice d'entrée (9) et d'un orifice de sortie (43) couplé au canal microfluidique (11), et un cadre (2 ; 79 ; 95 ; 103) configuré pour recevoir la puce microfluidique (3 ; 65 ; 77 ; 105) et pour permettre à la puce microfluidique (3 ; 65 ; 77 ; 105) d'être déplaçable par rapport au cadre (2 ; 79 ; 95 ; 103), la puce microfluidique (3 ; 65 ; 77 ; 105) étant accessible à travers une fenêtre du cadre, le procédé comprenant les étapes de :
l'alimentation du dispositif (1) dans un appareil de laboratoire, et
le déplacement de la puce microfluidique (3 ; 65 ; 77 ; 105) par rapport au cadre (2 ; 79 ; 95 ; 103) d'une première position à une deuxième position.

10. Procédé selon la revendication précédente, comprenant
le fonctionnement de la puce microfluidique (3 ; 65 ; 77 ; 105) et de l'appareil de laboratoire, dans lequel la première position de la puce microfluidique (3 ; 65 ; 77 ; 105) est une position non opérationnelle et la deuxième position est une position opérationnelle.

11. Procédé selon la revendication 9 ou 10, dans lequel la puce microfluidique (3 ; 65 ; 77 ; 105) comprend une pointe de pulvérisation (47) couplée au canal microfluidique (11) et configurée pour pulvériser un liquide dans un appareil de laboratoire, le procédé comprenant .
à la première position, la protection de la pointe de pulvérisation (47) à l'intérieur du cadre (2), et
à la deuxième position, la libération de la pointe de pulvérisation (47) et le positionnement de la pointe de pulvérisation (47) à l'intérieur de l'appareil de laboratoire.
